# EUROPEAN PATENT SPECIFICATION

(11) **EP 0 883 512 B1**
(45) Date of publication and mention of the grant of the patent: **13.08.2003**
(21) Application number: 97906410.2
(22) Date of filing: 28.02.1997
(51) Int. Cl.: B60N 2/42

(54) **A method to safely restrain occupants in a crashing vehicle and a seat constructed to perform said method**
Verfahren zum Sichern von Insassen in einem Fahrzeug bei einem Autounfall und Fahrzeugsitz, um dies zu bewerkstelligen
Procédé de retenue de sécurité des occupants d'un véhicule en cas d'accident et siège construit à cet effet

(30) Priority: 29.02.1996 SE 9600817; 24.05.1996 SE 9602029
(43) Date of publication of application: 16.12.1998
(73) Proprietor: Blomdell, Peter, 412 67 Göteborg (SE); Agerberth, Rolf, 412 66 Göteborg (SE)
(72) Inventor: Blomdell, Peter, 412 67 Göteborg (SE); Agerberth, Rolf, 412 66 Göteborg (SE)
(74) Representative: Eriksson, Hans Gustaf
(86) International application number: PCT/SE97/00354
(87) International publication number: WO 97/031800

(56) References cited:
- EP-A- 0 590 237
- WO-A-90/14245
- DE-B- 2 546 157
- US-A- 4 993 778

## Description

The present invention relates to a method to safely restrain occupants in a crashing vehicle, and a seat constructed to perform said method. In a closer aspect the invention relates to a technique to obtain a safe and gentle restraint of passengers/driver by using a safety belt integrally with the chair.
The advantages of being restrained by a safety belt to avoid injuries in a crashing car are well known. However, there are a few problems concerning how the safety belts protects the occupants. There are also problems to arrange an attachment of the safety belts in a limited space , e.g. in mini buses and in public transportation.
The use of safety belts when going by public transportation involves problems regarding a safe attachment of the safety belts in the vehicle/the seat. An attachment in the seat of the type used to day must involve a rigid and voluminous construction, which will occupy some of the useful space in the vehicle. An attachment outside the chair must have rigid points of attachment also occupying some of the useful space in the vehicle and postulate a great strength of the vehicle's walls and floor. Other claims to the attachment of the safety belts in the vehicle are that they by no means shall increase the risk of injures on other passengers.
DE-A-2 546 157 discloses a back rest at a vehicle seat with a built in safety belt, the back rest being resiliently collapsible while bending in its transverse
direction. Possibly this construction is poor in absorbing loads at crashes over 30 km/h. Thus at greater loads the resiliency being obtained will come to a sudden stop.
US-A-4 993 778 discloses a seat construction with an integral safety belt. The attachment of the belt is secured outside the seat. This construction is aimed at providing a reinforced framework permitting to carry the three anchoring devices of a safety belt, while having a reasonable weight and also permitting to modify the inclination of the backrest, rather than being conceived mainly for accumulating the loads in a crash.
WO 9014245 is one example of a seat construction being extremely solid. In a crash with this construction nothing seems to favour a gentle, progressive restraint of the occupant. This document is one example of a relatively voluminous and heavy construction. The same can be said about EP-0 590 237 in which an effort has been made to get a slim construction. However, the construction looks complex and possibly rather heavy.
The object of the present invention is to obtain a vehicle seat and a method admitting the arrangement of a safety roll belt integrally with the seat, wherein a light and not voluminous seat body is capable of accumulating great loads in a crash by a beneficial distribution of the actual load from the belt.

According to the present invention this is obtained by a vehicle seat and a method having the characterising clauses mentioned in the claims. In a crash the kinetic energy of the occupants is restrained by the safety belts and by a co-operating resiliently deformable double tube frame construction in such a way that during a modest load the upper portion of the double tube frame construction will move resiliently, but at a greater impact or load a permanent deformation of the double tube frame construction will occur at the same time as the resilient flexibility, also at a permanent deformation, will contribute in bringing the occupant back towards the back rest of the seat by a resilient back transfer of an upper portion of the double tube frame construction. It has been shown that, contrary to expectations, the loads on the neck portion of the occupant, and whiplash injuries, will be decreased compared to the same restraint of an occupant in a conventional safety belt in a seat having the belt attached outside of the seat. To some extent this beneficial effect can be explained by the braking effect on the occupant being dynamic in such a way that at first the belt is stretched during a simultaneous progressive dampening by the resiliency in the upper portion of the tube frame at the back rest. When this happens the permanent deformation will occur, but not at that part of the double tube frame construction where the resilient movability takes place. Thus, this resiliency is still there and can meet the occupant at a jerk backwards to slow down the speed of the head.

At higher speeds there will be a phase where a deformation of the bent portion of the parallel tube construction occurs (at the passage from the backrest to the seat). At the same time, or a later moment (in dependence of the type of the vehicle - e.g. a city bus or a tourist bus - it is possible to start an energy accumulating deformation of the brackets on the floor usually used to attach the seat construction to the floor of the vehicle. By a suitable dimensioning and choice of material a very gentle slowing down of the occupants can occur during a maximal resilient and permanent deformation of all the deformation zones.
Thus according to the present invention as defined in claims 1 and 6, seats being specially adapted to children and school-buses can be manufactured in such a way that some of the seats are made for children with a weight up to e.g. 20 kg; other seats for children up to e.g. 20 - 30 kg; etc. Hereby the safety for all the occupants can be increased. It is of course possible to use the invention for family cars too. Thus, the dimensioning and form of the seat is not made only with regard to the weight of the body, but also to the length, the corpulence, and to the length ratio between body and legs.

Accordingly, the present invention discloses a vehicle seat having the features set forth in claim 1 and aimed to perform a gentle retention of the occupants/driver by a safety belt being attached at the seat.

Further features of the vehicle seat are disclosed in dependent claims 2 to 5.

This construction of a vehicle seat saves valuable space, preferably in public transport vehicles having several rows of seats in front of each other; at the same time, the weight can be kept rather low.

The invention also discloses a method of restraining an occupant of a vehicle seat, having the steps set forth in method claim 6. Further steps are disclosed in dependent claims 7 and 8.

The invention will now be described in connection to embodiments shown in the drawings, where;
Fig. 1 is an oblique front pictorial view of a seat body principally comprising a parallel tube frame arrangement according to the invention;
Fig. 2 is an oblique front pictorial view from above of the seat body according to fig. 1;
Fig. 3 is an oblique front pictorial view from above of the seat body with reinforcing plates and with a covering back;
Fig. 4a and Fig. 4b show diagrammatically how the seat body, comprising a parallel tube frame arrangement, will act during influence from a load;
Fig. 5a and Fig. 5b is an oblique front pictorial view and an oblique back pictorial view, respectively of a complete vehicle seat built on a seat body/construction according to the invention.

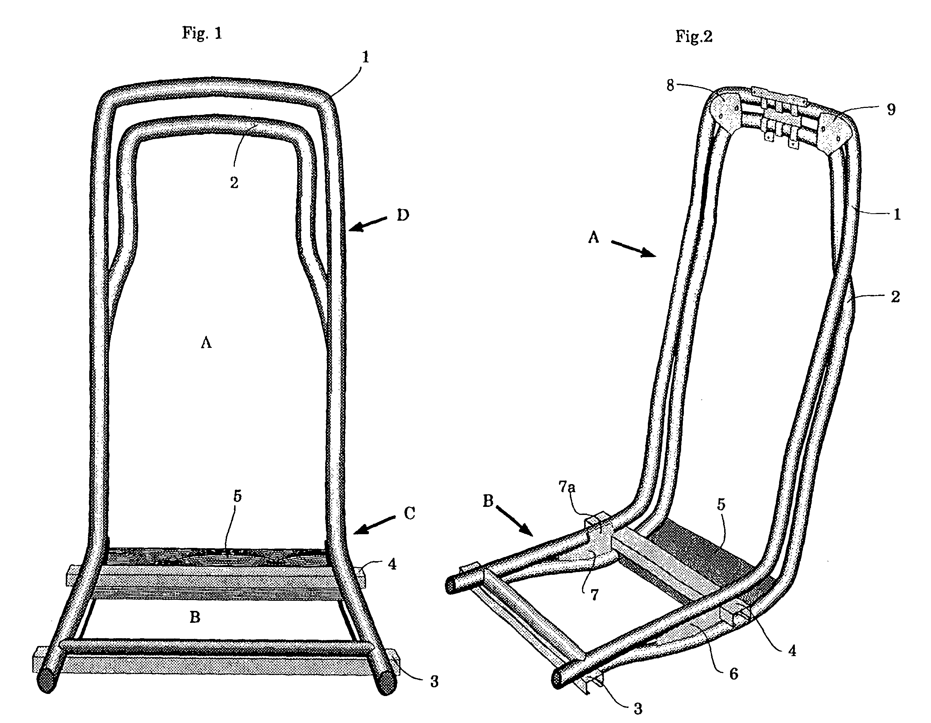

Fig. 1 discloses an oblique front pictorial view of a seat body principally comprising two parallel tube frame portions 1 and 2. The portions 1 and 2 are parallel from the lower seat member B to the back member A via a bent portion C. U-girders 3 and 4 are used for attaching in a bracket portion (not shown) being locked to the floor of the vehicle. A stabilising plate 5 at the seat is attached to the tube frame portion 2. Approximately at the breast height - the position D in fig. 1 - the tube frame portions 1 and 2 are transferred - seen from below - from a position forward/behind each other to a position side by side (see also fig. 2). Two fastening means 8 and 9 connect the tube frame portions at the uppermost part of the seat body. In fig. 2 is shown how the tube frame portions 1 and 2 are separated from each other at said bent portion C.

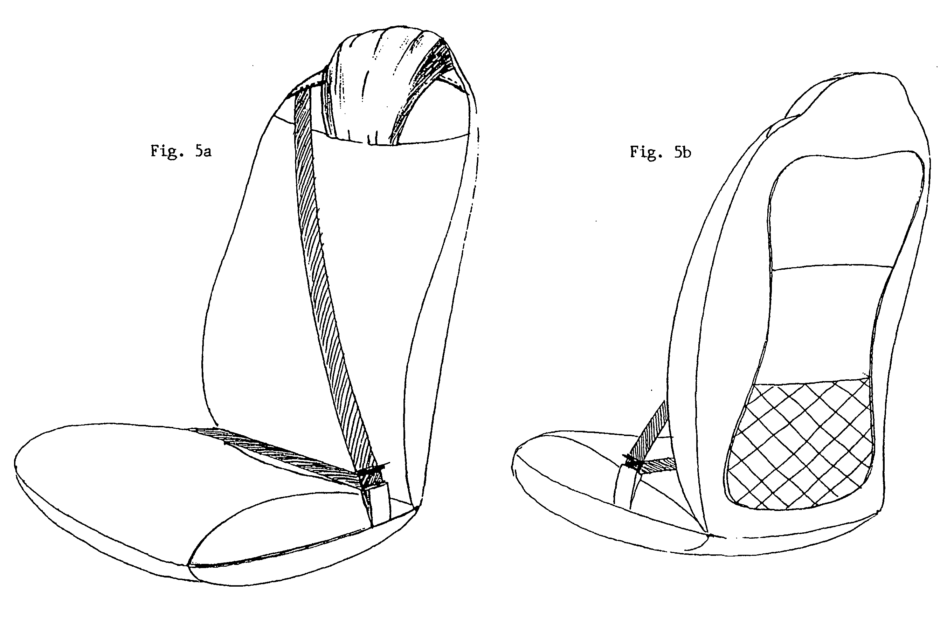

A reinforcing plate 7 is arranged at the lower seat portion and will stiffen the seat body and increase its resistance to breaking. This is also the reason for using tubes with an oval cross section in the body. At the plates 6 and 7 there are also bent portions 6a (not visible) and 7a. These bent portions will connect to the oval cross section of the tube and will, together with an adjacent tube portion, form an arrangement for attaching a seat member.

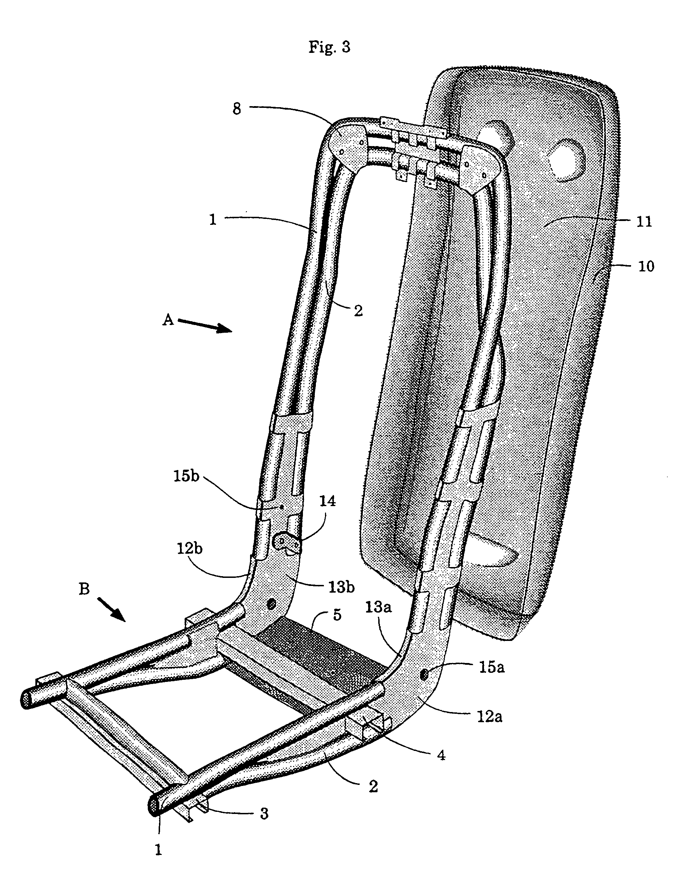

In fig. 3 is shown how the space between the tube frame portions in connection to the bent portion C have been complemented with form plates 12 and 13.
These form plates will form pairs 12a, 13a and 12b, 13b, respectively, said pairs being connected close to the tube frame portions 1 and 2. Preferably said pairs are clamped in a fit position. By having the form plates 12a, 12b, 13a and 13b at both sides - from the outside and the inside - they can be connected by welding, or in a simpler way by bolts and nuts and/or by screws. A rear cover 10, e.g. glass fibre reinforced with a covering rear 11 will make the backrest of the seat. To said backrest the cushioned lower seat member (shown in fig. 5) will complete the seat.

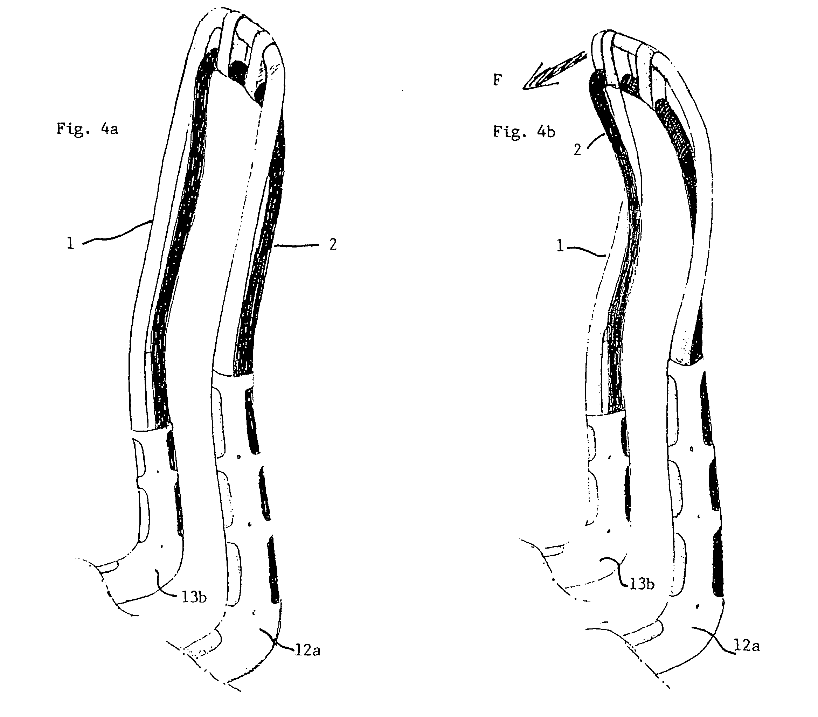

Fig. 4a shows the position of the upper resilient elastic portion of the parallel tube arrangement in a non-loaded position, while fig. 4b shows the same portion of the arrangement during load from a force F (from the safety belt in a crash). Here it is clearly shown how the tube portions co-operate when being placed side by side and also being exposed to a torsion at the passage from the lower position with the tube portions being placed behind each other. This torsion will probably contribute to the excellent characteristics helping to create a "soft", progressive restraint of the occupant.
Finally, fig. 5a and fig. 5b show an oblique front pictorial view and an oblique back pictorial view, respectively of a complete vehicle seat built on a seat body/-construction according to the invention.
The invention is not restricted to the shown embodiments but modifications can be made within the scope of the following claims.

## Claims

1. A seat for a vehicle comprising a seat frame **characterised in**:
the seat frame comprising two generally inverted-U-shaped tubes (1, 2) that are immediately adjacent to each other, said two tubes (1, 2) at a closed end of the inverted-U-shape defining an upper back portion of the seat, at a downwardly depending middle portion (A) of the inverted-U-shape said two tubes defining a lower back portion of the seat, and at an open end of the inverted-U-shape said two tubes being bent relative to the middle portion so as to define a seat portion (B) of the seat,
in said lower back portion, axes of said tubes (1, 2) being generally parallel to each other in a plane perpendicular to a plane of said lower back portion,
in said upper back portion, axes of said tubes being generally parallel to each other in a plane parallel to the plane of said lower back portion; and
at least two reinforcing, deformable plates (12, 13), each of said plates holding said two tubes (1, 2) parallel to each other in said lower back portion.

2. A seat according to claim 1, **characterised in**
**that** the deformable form plates (12) are so pre-shaped that they will make a close connection to the parallel tubes (1, 2) at the passage from the seat portion (B) to the back rest portion (A).

3. A seat according to claim 1, **characterised in that** the tubes (1, 2) have an oval cross section to increase the bending resistance in a forward direction.

4. A seat according to claims 1 - 3, **characterised in**
**that** the two deformable form plates (12, 13) from two sides are attached to the parallel tubes (1, 2) and that the form plates (12a, 13a; 12b, 13b) are mutually attached to each other.

5. A seat according to claim 1, **characterised in**
**that** the safety belt is a three-point belt, the upper attachment of which is made at the parallel tubes (1, 2).

6. A method of restraining an occupant in a seat in a decelerating vehicle, the method comprising the steps, during vehicle deceleration, of:
restraining an occupant facing forward in a seat in a decelerating vehicle with a seat belt attached to the seat at an upper back portion of the seat and to a seat portion of the seat, the seat having two generally inverted-U-shaped tubes (1, 2) that are immediately adjacent to each other, the two tubes at a closed end of the inverted-U-shaped defining the upper back portions of the seat, at a downwardly depending middle portion of the inverted-U-shape the two tubes defining the lower back portion of the seat, wherein the two tubes are parallel to each other with one of the tubes being directly behind the other of the tubes at the lower back portion of the seat, and wherein the two tubes are parallel to each other with one of the tubes being directly beneath the other tube at the upper back portion of the seat;
elastically deforming the two tubes in the upper back portion of the seat under the strain of the attached seat belt on the upper back portion;
resisting permanent deformation of the two tubes in the lower back portion of the seat by holding the two tubes parallel to each other with the one of the tubes directly behind the other of the tubes with a reinforcing, deformable plate (12, 13) attached to the two tubes on either side of the seat in the lower back portion of the seat.

7. A method according to claim 6, **characterised in**
**that** in a crash the kinetic energy of the occupant is restrained by said belt and by the co-operating resiliently deformable double tube frame construction in such a way that, at a moderate load, the upper portion of this double tube frame construction will move resiliently, and with a bigger load a permanent deformation will be the result in this double tube frame construction at the same time as the resilient flexibility of the upper portion of the double tube frame construction in the seat, in a phase of permanent deformation also can co-operate in bringing the occupant back to the back rest of the seat by a resetting elasticity of the upper portion.

8. A method according to claim 6, **characterised in**
**that** the dimensioning and the choice of material for the components forming part of and connecting the parallel tube frame construction, and for the attachment of a bracket between the seat and the floor are made in such a way that a soft and gentle restraint is obtained, in a collision situation, while considering the weight of the body of the occupant.

## Patentansprüche

1. Sitz für ein Fahrzeug umfassend einen Sitzrahmen, **dadurch gekennzeichnet, dass** der Sitzrahmen zwei im wesentlichen umgedrehte, U-förmige Rohre (1, 2) umfasst, welche direkt neben einander angeordnet sind, wobei die beiden genannten Rohre (1, 2) ein oberes Rückenteil des Sitzes an einem geschlossenen Ende der umgedrehten U-Form definieren, die beiden genannten Rohre einen unteren Rückenteil des Sitzes an einem nach unten sich erstreckendes Mittelteil (A) der umgedrehten U-Form definieren, und an einem offenen Ende der umgedrehten U-Form die beiden genannten Rohre gegenüber dem Mittelteil derart gebogen sind, dass sie einen Sitzteil (B) des Sitzes definieren,
die Achsen der genannten Rohre (1, 2) in dem genannten unteren Rückenteil in einer Ebene senkrecht zu einer Ebene des genannten unteren Rückenteils im wesentlichen parallel zu einander sind,
die Achsen der genannten Rohre (1, 2) in dem genannten oberen Rückenteil in einer Ebene parallel zu der Ebene des genannten unteren Rückenteils sind im wesentlichen parallel zu einander; und
mindestens zwei verformbare Verstärkungsplatten (12, 13) angeordnet sind,
wobei jede der genannten Platten die beiden genannten Rohre (1, 2) parallel zu einander in dem genannten unteren Rückenteil festhält.

2. Sitz nach Anspruch 1, **dadurch gekennzeichnet, dass**
die verformbaren Formplatten (12) so vorgeformt sind, dass sie eine enge Verbindung mit den parallelen Rohren (1, 2) am Übergang von dem Sitzteil (B) zum Rücken-Stützteil (A) bilden.

3. Sitz nach Anspruch 1, **dadurch gekennzeichnet, dass**
die Rohre (1, 2) einen ovalen Querschnitt aufweisen, um den Biegewiderstand in einer Vorwärtsrichtung zu erhöhen.

4. Sitz nach einem der Ansprüche 1 - 3, **dadurch gekennzeichnet, dass**
die beiden verformbaren Formplatten (12, 13) von zwei Seiten an den parallelen Rohren (1, 2) befestigt sind, und dass die Formplatten (12a, 13a; 12b, 13b) jeweils an einander befestigt sind.

5. Sitz nach Anspruch 1, **dadurch gekennzeichnet, dass**
der Sicherheitsgurt ein Dreipunktgurt ist, dessen oberer Befestigungspunkt an den parallelen Rohren (1, 2) angeordnet sind.

6. Verfahren zum Fest- oder Zurückhalten eines Insassen in einem Sitz in einem sich verlangsamenden Fahrzeug, wobei das Verfahren, während das Fahrzeug sich verlangsamt, folgende Schritte beinhaltet:
ein Fest- oder Zurückhalten eines mit dem Gesicht nach vorne sitzenden Insassen in einem Sitz in einem sich verlangsamenden Fahrzeug, mittels eines am oberen Rückenteil und am Sitzteil des Sitzes befestigten Sicherheitsgurtes, wobei der Sitz zwei im wesentlichen umgedrehte U-förmige, direkt an einander angrenzenden Rohre (1, 2) aufweist, wobei die beiden Rohre an einem geschlossenen Ende die umgedrehte U-Form die oberen Rückenteile des Sitzes definieren, wobei die beiden Rohre an einem sich nach unten erstreckenden Mittelteil der umgedrehten U-Form der beiden Rohre den unteren Rückenteil des Sitzes definieren, wobei die beiden parallel zueinander stehenden Rohre mit einem der Rohre am unteren Rückenteil des Sitzes unmittelbar hinter dem anderen Rohr angeordnet sind, und wobei die beiden parallel zu einander a n-geordneten Rohre mit einem der Rohre am oberen Rückenteil des Sitzes u n-mittelbar unter dem anderen Rohr angeordnet sind;
eine elastische Verformung der beiden Rohre im oberen Rücken teil des Sitzes unter der Belastung des befestigten Sicherheitsgurtes am oberen Rücke nteil; resistent gegen Dauerverformung der beiden Rohren im unteren Rückenteil des Sitzes dadurch, dass die beiden parallel zu einander stehenden Rohre mit einem der Rohre unmittelbar hinter dem anderen der Rohre mittels einer verstärkenden, verformbaren Platte (12, 13), die an den beiden Rohre auf beiden Seiten des Sitzes im unteren Rückenteil des Sitzes befestigt ist, gehalten werden.

7. Verfahren nach Anspruch 6, **dadurch gekennzeichnet, dass**
die kinetische Energie des Insassen bei einem Unfall von dem genannten Gurt und der zusammenwirkenden, federnd verformbaren Doppelrahmen konstruktion derart zurückgehalten wird, dass der obere Teil dieser Doppelrohrrahmenkonstruktion bei mässiger Belastung sich federnd bewegen wird und bei einer grösseren Belastung in einer dauerhaften Verformung dieser Doppelroh r-rahmenkonstruktion resultiert, wobei die federnde Flexibilität des oberen Teils der Doppelrohrrahmenkonstruktion im Sitz in einer Phase der dauerhaften Verformung auch mit einer federnde Flexibilität des oberen Teils zusammenwirken kann, um den Insassen zurück gegen die Rückenlehne des Sitzes zu bringen.

8. Verfahren nach Anspruch 6, **dadurch gekennzeichnet, dass**
die Dimensionierung und die Wahl des Materials der Komponente, die einen Teil der parallele Rohrrahmenkonstruktion ausmachen und diese verbinden und für die Befestigung eines Trägers oder Halters zwischen dem Sitz und dem Boden so verwirklicht ist, dass bei einem Autounfall eine sanfte und weiche Sicherung unter Berücksichtigung des Körpergewichts des Insassen erreicht wird.

## Revendications

1. Siège pour un véhicule comprenant une armature de siège, **caractérisé en ce que** :
l'armature du siège comprenant deux tubes en U généralement inversés (1, 2) qui sont immédiatement adjacents l'un par rapport à l'autre, lesdits deux tubes (1, 2) à une extrémité fermée de la forme en U inversée définissant une partie de dossier supérieure du siège, à une partie médiane dépendante descendante (A) de la forme en U inversée, lesdits deux tubes définissant une partie de dossier inférieure du siège, et à une extrémité ouverte de la forme en U inversée, lesdits deux tubes étant courbés par rapport à la partie médiane de façon à définir une partie de siège (B) du siège ;
dans ladite partie de dossier inférieure, les axes desdits tubes (1, 2) étant généralement
parallèles l'un à l'autre dans un plan perpendiculaire à un plan de ladite partie de dossier inférieure, dans ladite partie de dossier supérieure, les axes desdits tubes étant généralement parallèles l'un à l'autre dans un plan parallèle au plan de ladite partie de dossier inférieure ; et
au moins deux plaques de renforcement déformables (12, 13), chacune desdites plaques maintenant lesdits deux tubes (1, 2) parallèlement l'un à l'autre dans ladite partie de dossier inférieure.

2. Siège selon la revendication 1, **caractérisé en ce que** :
les plaques de formes déformables (12) sont pré-façonnées afin de constituer une liaison fermée aux tubes parallèles (1, 2) au niveau du passage de la partie du siège (B) vers la partie du dossier (A).

3. Siège selon la revendication 1, **caractérisé en ce que** les tubes (1, 2) possèdent une coupe droite ovale pour augmenter la résistance à la courbure dans une direction vers l'avant.

4. Siège selon les revendications 1 à 3, **caractérisé en ce que** les deux plaques de formes déformables (12, 13) à partir des deux côtés sont liées aux tubes parallèles (1, 2) et que les plaques de formes (12a, 13a ; 12b, 13b) sont mutuellement fixées l'une à l'autre.

5. Siège selon la revendication 1, **caractérisé en ce que** :
la ceinture de sécurité est une ceinture à trois points, dont la fixation supérieure se fait au niveau des tubes parallèles (1, 2).

6. Procédé pour retenir un occupant sur son siège dans un véhicule décélérant, le procédé comprenant les étapes, pendant la décélération du véhicule, consistant à :
- retenir un occupant faisant face vers l'avant sur son siège dans un véhicule décélérant avec une ceinture de sécurité attachée au siège à une partie de dossier supérieure du siège et à une partie d'assise du siège, le siège ayant deux tubes (1, 2) en forme de U généralement inversés qui sont immédiatement adjacents l'un par rapport à l'autre, les deux tubes à une extrémité fermée de la forme en U inversé définissant les parties de dossier supérieures du siège, à une partie médiane dépendante descendante de la forme en U inversé, les deux tubes définissant la partie de dossier inférieure du siège, dans lequel les deux tubes sont parallèles l'un à l'autre, un des tubes étant directement derrière l'autre tube à la partie de dossier inférieure du siège, et dans lequel les deux tubes sont parallèles l'un à l'autre, un des tubes étant directement en dessous de l'autre tube à la partie de dossier supérieure du siège ;
- déformer de façon flexible les deux tubes dans la partie de dossier supérieure du siège sous la contrainte de la ceinture de sécurité attachée sur la partie de dossier supérieure ;
- résister à la déformation permanente des deux tubes dans la partie de dossier inférieure du siège en maintenant les deux tubes parallèles l'un à l'autre, un des tubes étant directement derrière l'autre tube avec une plaque de renforcement déformable (12, 13) fixée aux deux tubes sur l'un des côtés du siège dans la partie de dossier inférieure du siège.

7. Procédé selon la revendication 6, **caractérisé en ce que** :
lors d'un accident, l'énergie cinétique de l'occupant est restreinte par ladite ceinture et par la construction d'armature en tubes doubles déformables co-agissant de façon flexible de telle façon que, à une charge modérée, la partie supérieure de cette construction d'armatureen tubes doubles bougera de façon flexible, et sous une charge plus grande, une déformation permanente sera le résultat dans cette construction d'armature en tubes doubles tandis que la flexibilité souple de la partie supérieure de la construction d'armature en tubes doubles dans le siège, dans une phase de déformation permanente, pourra également co-agir en ramenant l'occupant contre le dossier du siège par une élasticité de retour de la partie supérieure.

8. Procédé selon la revendication 6, **caractérisé en ce que** :
le dimensionnement et le choix du matériau pour les composants formant une pièce de et reliant la construction d'armature en tubes parallèles, et pour la fixation d'une applique entre le siège et le plancher, sont réalisés de telle façon qu'une retenue molle et douce est obtenue dans une situation de collision, tout en tenant compte du poids du corps de l'occupant.
